# EUROPEAN PATENT APPLICATION

(11) **EP 4 838 592 A1**
(43) Date of publication of application: **11.11.2026**
(21) Application number: 24927447.3
(22) Date of filing: 01.07.2024
(51) Int. Cl.: H01M 8/1004, H01M 4/88, H01M 8/1086, H01M 8/1067, B29C 55/02, H01M 8/10

(54) **MEMBRANE-ELECTRODE ASSEMBLY AND MANUFACTURING METHOD THEREFOR**

(30) Priority: 29.02.2024 KR 20240029336
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Kah Young, Seoul 07793 (KR); KONG, Nak Won, Seoul 07793 (KR); LEE, Eun Su, Seoul 07793 (KR); KIM, Hyeong Su, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Vossius & Partner Patentanwälte Rechtsanwälte mbB
(86) International application number: PCT/KR2024/009223
(87) International publication number: WO 2025/183274

(57) **Abstract**

The present invention relates to a membrane-electrode assembly and a fuel cell including same. The membrane-electrode assembly has, by means of elongation, surface irregularities only on the surface of a catalyst layer, such that interfacial bonding strength is increased by the surface irregularities, the degree of contraction or expansion during cell operation is reduced such that durability may be improved, and furthermore, porosity is improved such that mass transfer and cell performance may also be improved.

## Description

### Technical Field

The present disclosure relates to a membrane-electrode assembly and a method for manufacturing the same.

### Background Art

A fuel cell is a power generation system that directly converts chemical energy generated by a chemical reaction between hydrogen and oxygen contained in hydrocarbon fuel materials such as methanol, ethanol, and natural gas into electrical energy. Representative examples of such a fuel cell include polymer electrolyte membrane fuel cells (PEMFCs). The polymer electrolyte membrane fuel cells are gaining attention as portable, automotive, and home power supply devices due to their advantages, such as a low operating temperature of less than 100°C, fast start-up and response characteristics, and excellent durability.

In the fuel cell system, the membrane-electrode assembly (MEA) that substantially generates electricity has a structure in which an anode electrode (also referred to as a fuel electrode or an oxidation electrode) and a cathode electrode (also referred to as an air electrode or a reduction electrode) are positioned with a polymer electrolyte membrane interposed between them.

The membrane-electrode assembly is intended to be used under the operating temperature conditions of the fuel cell and undergoes expansion and shrinkage depending on these temperature conditions. If such shrinkage and expansion are repeated, small pinholes may form in the membrane-electrode assembly, and these pinholes may cause cracks, which may degrade the durability and performance of the fuel cell.

Therefore, it is necessary to improve the durability and performance of the fuel cell by preventing the degradation of the membrane-electrode assembly under the operating temperature conditions of the fuel cell.

### DISCLOSURE

### Technical Problem

The present disclosure is intended to provide a membrane-electrode assembly that has enhanced durability and realizes improved performance, by mitigating the degree of shrinkage and expansion resulting from use under the operating temperature conditions of a fuel cell, and a method for manufacturing the same.

### Technical Solution

One embodiment of the present disclosure provides a membrane-electrode assembly comprising: a polymer electrolyte membrane; and a catalyst layer provided on at least one surface of the polymer electrolyte membrane, wherein the catalyst layer has surface irregularities on a surface thereof.

According to one embodiment of the present disclosure, the surface irregularities of the catalyst layer may be formed by stretching of the catalyst layer.

According to one embodiment of the present disclosure, the surface irregularities of the catalyst layer may be 0.1 µm or more and 6 µm or less.

According to one embodiment of the present disclosure, the surface irregularities of the catalyst layer may be formed in a concave shape.

According to one embodiment of the present disclosure, the depth of the surface irregularities may be 20% or less of the thickness of the catalyst layer.

According to one embodiment of the present disclosure, the surface irregularities may be irregularly distributed on the surface of the catalyst layer.

According to one embodiment of the present disclosure, the area of the surface irregularities on the catalyst layer may be 20% or more and 95% or less of the total active area of the catalyst layer.

According to one embodiment of the present disclosure, the thickness of the polymer electrolyte membrane may be 5 µm or more and 30 µm or less, and the thickness of the catalyst layer may be 1 µm or more and 30 µm or less.

One embodiment of the present disclosure provides a method for manufacturing a membrane-electrode assembly comprising: a step of preparing a polymer electrolyte membrane; a step of forming a catalyst layer on at least one surface of the polymer electrolyte membrane, thereby manufacturing a membrane-electrode assembly; and a step of forming surface irregularities on the catalyst layer by stretching the membrane-electrode assembly.

According to one embodiment of the present disclosure, the stretching may be performed in a machine direction (MD).

According to one embodiment of the present disclosure, the stretching may be performed at a stretching speed of 1.0 m/min or less.

According to one embodiment of the present disclosure, the stretching may be performed at a stretching tension of 30 N or less.

According to one embodiment of the present disclosure, the stretching may be performed such that the thickness reduction rate of the polymer electrolyte membrane is 5% or less.

According to one embodiment of the present disclosure, the stretching may be performed such that the rate of change in length of the active area of the catalyst layer is 8% or less.

### Advantageous Effects

In a membrane-electrode assembly according to one embodiment of the present disclosure, it is possible to form surface irregularities only on the surface of a catalyst layer while minimizing changes and damage to a polymer electrolyte membrane and the catalyst layer by stretching the membrane-electrode assembly under controlled stretching conditions during the manufacture of the membrane-electrode assembly.

The effects of the present disclosure are not limited to the above-described effects, and effects not mentioned will be clearly understood by those skilled in the art from the present specification and the accompanying drawings.

### Brief Description of Drawings

Fig. 1 is a schematic diagram showing the configuration of a membrane-electrode assembly before and after stretching, and shows a process of forming surface irregularities by stretching.
Fig. 2 shows surface images before and after stretching of the anode electrode and cathode electrode of each of membrane-electrode assemblies manufactured in Examples.
Fig. 3 is a surface image of a membrane-electrode assembly manufactured in Comparative Example 1.
Fig. 4 is a surface image after stretching of the cathode electrode of a membrane-electrode assembly manufactured in Comparative Example 2.
Fig. 5 is a surface image after stretching of the cathode electrode of a membrane-electrode assembly manufactured in Comparative Example 3.
Fig. 6 shows the results of evaluating the performance of membrane-electrode assemblies manufactured in Example 2 and Comparative Examples 1 to 3.
Fig. 7 is a schematic diagram illustrating the overall configuration of a fuel cell according to one embodiment of the present disclosure.

### Best Mode

Hereinafter, embodiments of the present disclosure will be described in detail with reference to the accompanying drawings so that those skilled in the art can easily carry out the present disclosure. However, the present disclosure may be embodied in various different forms and is not limited to the embodiments described herein.

In the drawings, thicknesses are exaggerated to clearly show various layers and regions, and the same reference numerals are used for similar parts throughout the specification. When a part such as a layer, film, region, or plate is referred to as being "above" or "on" another part, it refers not only to a case where the part is directly above the other part, but also to a case where a third part exists therebetween. Conversely, when any part is referred to as being "directly on" another part, it means that there is no third part therebetween.

The terms "include" and "contain" as used in the present specification are used to list materials, compositions, devices, and methods useful in the present disclosure, but are not limited to the listed examples.

Hereinafter, a membrane-electrode assembly according to one embodiment of the present disclosure will be described with reference to the drawings.

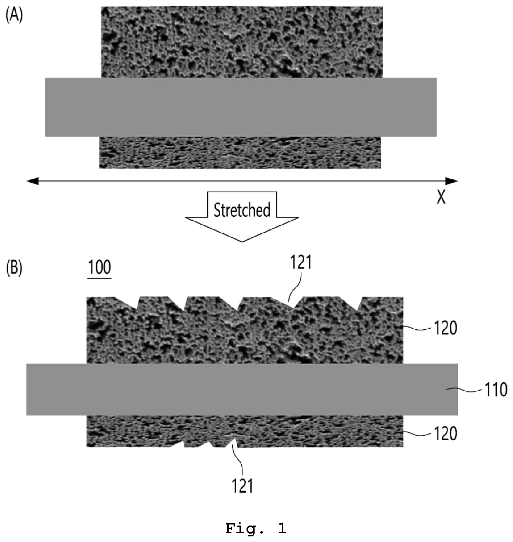

FIG. 1 is a schematic diagram showing the configurations of a membrane-electrode assembly before stretching (A) and after stretching (B), and shows a process of forming surface irregularities by stretching.

One embodiment of the present disclosure provides a membrane-electrode assembly 100 including: a polymer electrolyte membrane 110; and a catalyst layer 120 provided on at least one surface of the polymer electrolyte membrane 110, wherein the catalyst layer 120 has surface irregularities 121 on the surface thereof.

According to one embodiment of the present disclosure, it is possible to form surface irregularities only on the surface of the catalyst layer while minimizing changes and damage to the polymer electrolyte membrane and the catalyst layer by stretching the membrane-electrode assembly under controlled stretching conditions during the manufacture of the membrane-electrode assembly. In addition, as the membrane-electrode assembly has surface irregularities formed on the surface of the catalyst layer, it may effectively improve the durability of the fuel cell by mitigating changes caused by shrinkage or expansion during operation of the fuel cell. In addition, as the membrane-electrode assembly has surface irregularities formed on the surface of the catalyst layer, it may have improved mass transfer characteristics as well as increased interfacial adhesion and interfacial durability due to increased interfacial adhesion area. In addition, it is possible to improve the porosity of the catalyst layer through stretching of the catalyst layer, thereby improving the performance of a fuel cell including the membrane-electrode assembly.

According to one embodiment of the present disclosure, the membrane-electrode assembly may exhibit excellent performance over a wide temperature range. For example, the membrane-electrode assembly may exhibit excellent performance under temperature conditions of 40 °C or higher and 130°C or lower. As described above, as the membrane-electrode assembly has surface irregularities formed only on the surface of the catalyst layer, it is possible to mitigate changes caused by shrinkage or expansion during operation of the fuel cell. Thereby, the membrane-electrode assembly may have excellent durability and electrochemical properties under the operating temperature conditions of the fuel cell.

According to one embodiment of the present disclosure, the polymer electrolyte membrane 110 may have an ion-exchange function of moving hydrogen ions generated at the anode electrode to the cathode electrode. The polymer electrolyte membrane may be a hydrocarbon-based polymer electrolyte membrane, a fluorinated polymer electrolyte membrane, and a mixture or copolymer of one or more thereof.

The hydrocarbon-based polymer electrolyte membrane may include a hydrocarbon-based polymer, wherein the polymer may be selected from homopolymers or copolymers of styrene, imide, sulfone, phosphazene, ether-ether ketone, ethylene oxide, polyphenylene sulfide, or aromatic groups, and derivatives thereof, and these polymers may be used alone or in combination. An electrolyte membrane produced using a hydrocarbon polymer has a low production cost, is easy to produce, and exhibits high ionic conductivity compared to one produced using a fluorinated polymer.

More preferably, the suitable hydrocarbon-based membrane may be at least one selected from the group consisting of a sulfonated polysulfone membrane, a sulfonated polyethersulfone membrane, a sulfonated polyetherketone membrane, a sulfonated poly(ether ether ketone) membrane, a sulfonated poly(arylene ether ether ketone) membrane, a sulfonated poly(arylene ether sulfone) membrane, a sulfonated poly(arylene ether benzimidazole) membrane, and a membrane into which an ion conductor has been introduced.

The fluorinated polymer electrolyte membrane may be used without particular limitation as long as it is a material having sufficient mechanical strength to form a film as an ion-conducting membrane as well as high electrochemical stability. Specific examples of fluorinated polymer electrolyte membranes include perfluorosulfonic acid resin, a copolymer of tetrafluoroethylene and fluorovinyl ether, and the like, wherein the fluorovinyl ether moiety may have a function of conducting hydrogen ions. The copolymer is commercially available from Dupont under the trade name Nafion.

According to one embodiment of the present disclosure, the thickness of the polymer electrolyte membrane may be 5 µm or more and 30 µm or less. As described below, the polymer electrolyte membrane may have a reduced thickness by stretching of the membrane-electrode assembly compared to before stretching. That is, the thickness of the polymer electrolyte membrane may mean the thickness after stretching the membrane-electrode assembly as described below. By controlling the reduced thickness after stretching of the polymer electrolyte membrane within the above range, changes or damage to the polymer electrolyte membrane may be minimized, and accordingly, the performance and durability of the fuel cell may be maintained at an excellent level.

According to one embodiment of the present disclosure, the polymer electrolyte membrane may have a substantially flat planar shape without a bend formed by stretching as described below.

According to one embodiment of the present disclosure, an anode electrode may be provided on one side of the polymer electrolyte membrane 110, and a cathode electrode may be provided on the other side. An electrode, which is disposed on one side of the electrolyte membrane 110 and causes an oxidation reaction that generates hydrogen ions and electrons from fuel, is referred to as an anode electrode, and an electrode, which causes a reduction reaction that generates water from hydrogen ions supplied through the electrolyte membrane 110 and an oxidant in the electrode, is referred to as a cathode electrode.

According to one embodiment of the present disclosure, the electrode may include a catalyst layer 120. The catalyst layer 120 contains a catalyst. The catalyst may include any metallic catalyst particles which participate in the fuel cell reaction and may be used as a catalyst. Specifically, the catalyst may include platinum-based catalyst particles. The platinum-based catalyst may include particles of any one metal selected from the group consisting of platinum, ruthenium, osmium, a platinum-M alloy (where M is any one transition metal selected from the group consisting of Pd, Ir, Os, Ga, Ti, V, Cr, Mn, Fe, Co, Ni, Cu, Zn, Sn, Mo, W, Rh, Ru, and alloys thereof), and mixtures thereof. For example, the platinum-based catalyst may be Pt, Pt-Pd, Pt-Mn, Pt-Sn, Pt-Mo, Pt-Cr, Pt-W, Pt-Ru, Pt-Ni, Pt-Co, Pt-Y, Pt-Ru-W, Pt-Ru-Ir, Pt-Ru-Ni, Pt-Ru-Mo, Pt-Ru-Rh-Ni, Pt-Ru-Sn-W, Pt-Ru-Ir-Ni, Pt-Ru-Ir-Y, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, or Pt-Cr-Ir.

According to one embodiment of the present disclosure, the content of the catalyst may be, based on 100 parts by weight of the catalyst layer, 30 parts by weight or more and 85 parts by weight or less. In this case, the catalyst may include the above-described catalyst particles and a carrier. The weight ratio between the catalyst particles and the carrier in the catalyst may be 1:0.5 to 1:1.5. When the content of the catalyst in the catalyst layer is within the above-described range, the performance of the membrane-electrode assembly may be effectively improved and the degradation of durability thereof may be suppressed.

According to one embodiment of the present disclosure, the catalyst may be one in which catalyst particles are loaded on a catalyst carrier. As the catalyst carrier, any carrier may be used as long as it may be used as a carrier in the field of fuel cell technology. The catalyst carrier may preferably be a carbon-based carrier with excellent electrical conductivity. The carbon-based carrier may be selected from the group consisting of graphite, Super P, carbon fibers, carbon sheets, carbon black, ketjen black, denka black, acetylene black, carbon nanotubes (CNTs), carbon spheres, carbon ribbons, fullerenes, activated carbon, carbon nanofibers, carbon nanowires, carbon nanoballs, carbon nanohorns, carbon nanocages, carbon nanorings, ordered nano-/meso-porous carbon, carbon aerogel, mesoporous carbon, graphene, stabilized carbon, activated carbon, and combinations of two or more thereof.

According to one embodiment of the present disclosure, the catalyst layer may include an ionomer. As the ionomer, any ionomer may be used as long as it may be used as an ionomer in the field of fuel cell technology. The ionomer is intended for hydrogen ion transfer and may also function as a binder.

The ionomer may be a proton conductor having at least one proton exchange group selected from the group consisting of a sulfonic acid group, a carboxyl group, a boronic acid group, a phosphate group, an imide group, a sulfonimide group, a sulfonamide group, a sulfonic acid fluoride group, and combinations thereof. Specifically, according to one embodiment of the present disclosure, the ionomer may be a fluorinated proton conductor having a sulfonic acid group and/or a carboxyl group, a hydrocarbon-based proton conductor having a sulfonic acid group and/or a carboxyl group, or a mixture thereof. More specifically, the ionomer may be a fluorinated ionomer.

According to one embodiment of the present disclosure, the catalyst layer may be formed using a catalyst composition. The catalyst composition may contain the catalyst and the ionomer. Based on 100 parts by weight of the catalyst composition, the content of the catalyst may be 30 parts by weight or more and 85 parts by weight or less, and the content of the ionomer may be 15 parts by weight or more and 70 parts by weight or less. In this case, the catalyst may include the above-described catalyst particles and a carrier. The weight ratio between the catalyst particles and the carrier in the catalyst may be 1:0.5 to 1:1.5.

According to one embodiment of the present disclosure, the thickness of the catalyst layer may be 1 µm or more and 30 µm or less, 1 µm or more and 25 µm or less, 1 µm or more and 20 µm or less, 1 µm or more and 15 µm or less, or 1 µm or more and 10 µm or less. When the thickness of the catalyst layer is within the above-described range, the activity may be prevented from being reduced due to a small reaction area, and the increase in resistance due to an increase in the migration distance of ions and electrons may be suppressed.

According to one embodiment of the present disclosure, the catalyst layer may have surface irregularities. Specifically, the surface irregularities may be formed on a surface of the catalyst layer, which is exposed to the outside. One surface of the catalyst layer may be in contact with the polymer electrolyte membrane, and the other surface of the catalyst layer may be exposed to the outside. In this case, the one surface and the other surface of the catalyst layer may be opposite surfaces. That is, surface irregularities may be formed on the other surface of the catalyst layer, which is exposed to the outside.

According to one embodiment of the present disclosure, the surface irregularities of the catalyst layer may be formed by stretching of the catalyst layer. As described below, the surface irregularities of the catalyst layer may be formed by stretching the membrane-electrode assembly including the polymer electrolyte membrane and the catalyst layer in a certain direction. When the method of stretching the catalyst layer is used, the physical properties of the catalyst layer may be easily controlled by linking the thickness of the catalyst layer with the surface irregularities, compared to when the surface irregularities are formed by a method such as etching, printing, or embossing. Meanwhile, when a method such as etching, printing, or embossing is used, ordered surface irregularities may be formed. In contrast, when the method of stretching the catalyst layer is used, more random surface irregularities may be formed on the catalyst layer. When more random surface irregularities are formed on the surface of the catalyst layer, the physical properties of the catalyst layer may be effectively improved while effectively reducing the production cost and time of the catalyst layer compared to when ordered surface irregularities are formed.

According to one embodiment of the present disclosure, the surface irregularities of the catalyst layer may be formed in a concave shape. When the surface irregularities are formed in a concave shape on one surface of the catalyst layer, which is exposed to the outside, the occurrence of deformation, pinholes, or cracks due to shrinkage or expansion of the membrane-electrode assembly may be reduced and the electrical properties of the catalyst layer may be maintained at excellent levels while improving the interfacial adhesion.

According to one embodiment of the present disclosure, the depth of the surface irregularities of the catalyst layer may be 0.1 µm or more and 6 µm or less. Specifically, the depth of the surface irregularities of the catalyst layer may be 0.1 µm or more and 6 µm or less, 0.5 µm or more and 5 µm or less, 0.5 µm or more and 3.5 µm or less, 0.5 µm or more and 2 µm or less, or 0.1 µm or more and 1.5 µm or less. By controlling the depth of the surface irregularities within the above range, the occurrence of deformation, pinholes, or cracks due to shrinkage or expansion of the membrane-electrode assembly may be reduced and the electrical properties of the catalyst layer may be maintained at excellent levels while improving the interfacial adhesion.

According to one embodiment of the present disclosure, the surface irregularities of the catalyst layer may be formed in various shapes. The shape of the surface irregularities may vary depending on the thickness and composition of the catalyst layer, the thickness and composition of the polymer electrolyte membrane, and the shape and conditions of stretching. Meanwhile, the surface irregularities may have a wave shape. However, the surface irregularities may have a shape with only concave portions rather than a shape in which both convex and concave waves appear.

According to one embodiment of the present disclosure, the depth of the surface irregularities may be 20% or less, 15% or less, or 11% or less of the thickness of the catalyst layer. Additionally, the depth of the surface irregularities may be 5% or more, 7% or more, or 10% or more of the thickness of the catalyst layer. Referring to Fig. 1, one surface of the catalyst layer 120 is in contact with the polymer electrolyte membrane 110, and the other surface opposite to the one surface of the catalyst layer 120 is exposed to the outside. In this case, the surface irregularities 121 may be formed in a concave shape extending in a direction from the other surface of the catalyst layer 120 toward the one surface. When the ratio of the depth of the surface irregularities to the thickness of the catalyst layer is within the above-described range, the occurrence of deformation, pinholes, or cracks due to shrinkage or expansion of the membrane-electrode assembly may be reduced and the electrical properties of the catalyst layer may be maintained at excellent levels while improving the interfacial adhesion.

According to one embodiment of the present disclosure, the surface irregularities may be irregularly distributed on the surface of the catalyst layer. Here, "irregularly distributed" may mean that the surface irregularities are formed only in some regions of the surface of the catalyst layer or are irregularly distributed in several places on the surface of the catalyst layer. In addition, the plurality of surface irregularities may have depths or shapes independent of each other. For example, some surface irregularities may be formed to a depth of 20% of the catalyst layer thickness, and the other surface irregularities may be formed to a depth of 15% of the catalyst layer thickness. In addition, as shown in Fig. 1, the catalyst layer provided on one surface of the polymer electrolyte membrane may have a larger number of surface irregularities formed thereon, and the catalyst layer provided on the other surface may have a smaller number of surface irregularities. The distributions or shapes of the surface irregularities formed on the catalyst layers provided on both surfaces of the polymer electrolyte membrane may be similar or identical to each other.

According to one embodiment of the present disclosure, the area of the surface irregularities on the catalyst layer may be 20% or more and 95% or less of the total active area of the catalyst layer. Specifically, the ratio of the area of the surface irregularities to the total active area of the catalyst layer may be 20% or more and 90% or less, 30% or more and 90% or less, or 40% or more and 80% or less. As the ratio of the area of the surface irregularities is controlled within the above range, the occurrence of deformation, pinholes, or cracks due to shrinkage or expansion of the membrane-electrode assembly may be reduced and the electrical properties of the catalyst layer may be maintained at excellent levels while improving the interfacial adhesion.

The shape of the surface irregularities, the depth of the surface irregularities, the ratio of the depth of the surface irregularities to the thickness of the catalyst layer, the ratio of the area of the surface irregularities to the total active area of the catalyst layer, and the like may be calculated using images taken with an SEM or an optical microscope.

According to one embodiment of the present disclosure, a gas diffusion layer (not shown) may be formed on the catalyst layer 120. The gas diffusion layer is disposed between the membrane-electrode assembly and the separator plate of the fuel cell and is required to have high gas diffusivity for diffusing gas supplied from the separator plate to the catalyst layer, high water drainage ability to discharge water generated by an electrochemical reaction to the separator plate, and a high conductivity for extracting the generated current. For this reason, for the gas diffusion layer, a conductive porous substrate is used, which has conductivity and generally has a pore diameter in the range of 10 µm or more and 100 µm or less.

The gas diffusion layer may consist of the conductive porous substrate alone or include the conductive porous substrate and a microporous layer formed on one surface of the conductive porous substrate.

As the materials of the conductive porous substrate and microporous layer constituting the gas diffusion layer, any materials used in the art may be used without limitation as long as they satisfy the porosity or hydrophobicity conditions according to the electrode segment position described above. For example, the conductive porous substrate may be selected from the group consisting of carbon fiber paper, carbon cloth, carbon fiber nonwoven fabric, and carbon felt. The conductive porous substrate may be hydrophobic by further including a hydrophobic resin. A fluorinated resin or a silicone-based resin may be used as the hydrophobic resin. For example, as the hydrophobic resin, a fluorinated resin such as polytetrafluoroethylene (PTFE), a tetrafluoroethylene-hexafluoropropylene (FEP) copolymer, perfluoroalkoxyfluoride (PFA) resin, an ethylenetetrafluoroethylene (ETFA) copolymer, polyvinylidene fluoride (PVDF), polyvinyl fluoride (PVF), or the like may be used. The microporous layer may be formed to include a carbon-based material such as carbon black, acetylene black, or carbon nanotubes, or a fluorinated resin such as polytetrafluoroethylene or polyvinylidene fluoride (PVdF).

According to one embodiment of the present disclosure, as the catalyst layer 120 has surface irregularities, the interfacial adhesion between the catalyst layer and the gas diffusion layer may be increased.

One embodiment of the present disclosure provides a method for manufacturing a membrane-electrode assembly including: a step of preparing a polymer electrolyte membrane; a step of forming a catalyst layer on at least one surface of the polymer electrolyte membrane, thereby manufacturing a membrane-electrode assembly; and a step of forming surface irregularities on the catalyst layer by stretching the membrane-electrode assembly.

The membrane-electrode assembly according to the above-described embodiment may be manufactured through the method for manufacturing a membrane-electrode assembly according to this embodiment. That is, the polymer electrolyte membrane, catalyst layer, surface irregularities, catalyst composition, etc. in the membrane-electrode assembly according to this embodiment may be identical to the polymer electrolyte membrane, catalyst layer, surface irregularities, catalyst composition, etc. in the membrane-electrode assembly according to the above-described embodiment.

According to one embodiment of the present disclosure, in the step of preparing a polymer electrolyte membrane, the polymer electrolyte membrane may be prepared using materials and methods used in the art. For example, the polymer electrolyte membrane may be prepared by a method of casting a hydrocarbon-based ionomer dispersion, a fluorinated polymer dispersion, etc.

According to one embodiment of the present disclosure, the step of forming a catalyst layer may include forming a catalyst layer on one surface of the polymer electrolyte membrane using a catalyst composition. In this case, the catalyst composition may contain the above-described catalyst and ionomer. The catalyst layer may be formed on one surface, the other surface, or both surfaces of the polymer electrolyte membrane by a method of transferring the catalyst layer prepared from the catalyst composition.

According to one embodiment of the present disclosure, a membrane-electrode assembly including a polymer electrolyte membrane and a catalyst layer may be manufactured prior to the step of performing stretching. The manufacturing of the membrane-electrode assembly may be performed using any of general methods for manufacturing membrane-electrode assemblies, specifically, a batch method, a roll-to-roll decal transfer method, or a direct coating method.

According to one embodiment of the present disclosure, the stretching is performed after the manufacture of the membrane-electrode assembly and may be applied to either a roll-type membrane-electrode assembly or a sheet-type membrane-electrode assembly. Specifically, in the case of a roll-type membrane-electrode assembly, stretching may be performed by applying tension in any stretching direction when winding an electrolyte membrane having a catalyst layer formed thereon, and in the case of a sheet-type membrane-electrode assembly, stretching may be performed by pulling an electrolyte membrane having a catalyst layer formed thereon in any stretching direction.

According to one embodiment of the present disclosure, the stretching may be stretching in the machine direction (MD), stretching in the transverse direction (TD), or biaxial stretching in both the machine and transverse directions. To minimize changes and damage to the polymer electrolyte membrane and catalyst layer during stretching, stretching in one direction is preferred, and stretching in the machine direction (MD) is more preferable than stretching in the transverse direction in terms of processability. Referring to Fig. 1, the X-direction may correspond to the machine direction (MD), wherein the machine direction may refer to the lengthwise direction of the membrane-electrode assembly. For example, regarding the width and length of the membrane-electrode assembly, if the width is longer than the length, the width direction may correspond to the machine direction.

According to one embodiment of the present disclosure, the stretching may be performed at a stretching speed of 1.0 m/min or less. Specifically, the stretching speed may be 0.9 m/min or less, 0.8 m/min or less, or 0.5 m/min or less. Additionally, the stretching speed may be 0.05 m/min or more, 0.1 m/min or more, or 0.3 m/min or more. By performing the stretching under the stretching conditions described above, it may be easier to control the surface irregularities so that they are formed in a concave shape only on the surface of the catalyst layer.

According to one embodiment of the present disclosure, the stretching may be performed at a stretching tension of 30 N or less. Specifically, the stretching tension may be 28 N or less, 25 N or less, or 23 N or less. Additionally, the stretching tension may be 6 N or more, 10 N or more, 15 N or more, or 18 N or more. In this case, the stretching tension condition may be a condition for stretching using a roll-to-roll process. By performing the stretching under the stretching conditions described above, it may be easier to control the surface irregularities so that they are formed in a concave shape only on the surface of the catalyst layer.

According to one embodiment of the present disclosure, the stretching may be performed such that the thickness reduction rate of the polymer electrolyte membrane is 5% or less. As the membrane-electrode assembly is stretched, the thickness of the polymer electrolyte membrane may be reduced. That is, the thickness reduction rate refers to the rate of reduction in the thickness of the polymer electrolyte membrane after stretching relative to the thickness of the polymer electrolyte membrane before stretching. The thickness reduction rate of the polymer electrolyte membrane may be 1% or more and 5% or less, 1% or more and 3% or less, or 1% or more and 2% or less. When the stretching is performed such that the thickness reduction rate of the polymer electrolyte membrane satisfies the above-described range, damage or change to the polymer electrolyte membrane during the stretching process may be prevented.

According to one embodiment of the present disclosure, the stretching may be performed such that the thickness reduction rate of the catalyst layer is 5% or less. The thickness reduction rate refers to the rate of reduction in thickness of the catalyst layer after stretching relative to the thickness of the catalyst layer before stretching. The thickness reduction rate of the catalyst layer may be 1% or more and 5% or less, 1% or more and 3% or less, or 1% or more and 2% or less. When the stretching is performed so that the thickness reduction rate of the catalyst layer satisfies the above-described range, damage or change to the catalyst layer during the stretching process may be prevented.

According to one embodiment of the present disclosure, the stretching may be performed such that the rate of change in length of the active area of the catalyst layer is 8% or less. Specifically, the rate of change in length of the active area of the catalyst layer may mean the rate of increase in length. In addition, the rate of change in length of the active area of the catalyst layer may be 1% or more and 8% or less, 3% or more and 7% or less, or 5% or more and 7% or less. Here, the rate of change in length of the active area may refer to a change in length along the longer axis or a change in length along the longitudinal direction of the active area. By controlling the rate of change in length of the active area of the catalyst layer within the above range, damage or change to the catalyst layer during the stretching process may be prevented.

A fuel cell according to one embodiment of the present disclosure may be a fuel cell which includes the membrane-electrode assembly and uses, for example, hydrogen gas as fuel.

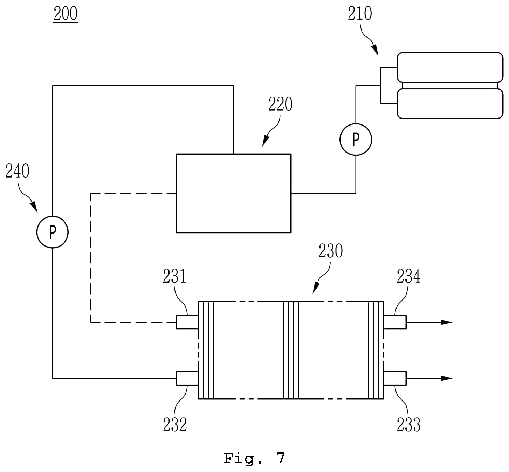

Fig. 7 is a schematic diagram illustrating the overall configuration of a fuel cell.

Referring to Fig. 7, a fuel cell 200 may include: a fuel supply unit 210 configured to supply a mixed fuel composed of fuel and water; a reforming unit 220 configured to reform the mixed fuel to generate a reformed gas containing hydrogen gas; a stack 230 configured to generate electrical energy by causing an electrochemical reaction between the reformed gas containing hydrogen gas supplied from the reforming unit 220 and an oxidant; and an oxidant supply unit 240 configured to supply an oxidant to the reforming unit 220 and the stack 230.

The stack 230 may include a plurality of unit cells that generate electrical energy by inducing an oxidation/reduction reaction between the reformed gas containing hydrogen gas supplied from the reforming unit 220 and the oxidant supplied from the oxidant supply unit 240.

Each unit cell means a unit cell that generates electricity, and may include a membrane-electrode assembly that oxidizes/reduces the reformed gas containing hydrogen gas and the oxygen of the oxidant, and separator plates (also called bipolar plates, hereinafter referred to as "separator plates") for supplying the reformed gas containing hydrogen gas and the oxidant to the membrane-electrode assembly. The separator plates are disposed on both sides of the membrane-electrode assembly. At this time, the separator plates located at the outermost sides of the stack, respectively, are also specifically referred to as end plates.

Among the separator plates, an end plate includes a pipe-shaped first supply tube 231 for injecting the reformed gas containing hydrogen gas supplied from the reforming unit 220, and a pipe-shaped second supply tube 232 for injecting oxygen gas, and the other end plate includes a first discharge tube 233 for discharging the remaining unreacted reformed gas containing hydrogen gas from the plurality of unit cells to the outside, and a second discharge tube 234 for discharging the remaining unreacted oxidant from the unit cells to the outside.

In the fuel cell, the separator, fuel supply unit, and oxidant supply unit constituting the electricity generation unit, except for the membrane-electrode assembly 100 according to one embodiment of the present disclosure, are the same as those used in conventional fuel cells, and thus detailed description thereof will be omitted herein.

### Mode for Invention

Hereinafter, examples of the present disclosure will be described in more detail so that a person skilled in the art to which the present disclosure pertains can easily carry out the present disclosure. However, the present disclosure may be embodied in various different forms and is not limited to the examples described herein.

### [Example 1]

### 1-(1): Manufacturing of Membrane-Electrode Assembly

A catalyst was prepared by loading Pt catalyst particles with a particle size of about 30 to 200 nm on a carrier (carbon black) in a loading amount of 50 wt%. A catalyst composition was prepared by mixing the catalyst with a fluorinated ionomer (Nafion D2020). At this time, based on 100 parts by weight of the catalyst composition, the content of the catalyst (50% Pt/C) was 50 parts by weight and the content of the fluorinated ionomer was 50 parts by weight.

Then, the catalyst composition was applied to a transfer substrate to a thickness of 7 µm.

A hydrocarbon polymer electrolyte membrane (thickness: 20 µm) was prepared by casting a hydrocarbon-based ionomer (polyphenylene-based ionomer) dispersion.

Next, the catalyst layer prepared as described above was transferred to both sides (upper and lower sides) of the prepared polymer electrolyte membrane to obtain a membrane-electrode assembly. At this time, the thickness of the catalyst layer was about 6.8 µm.

### 1-(2): Manufacturing of Membrane-Electrode Assembly (Formation of Surface Irregularities)

The membrane-electrode assembly manufactured in Example 1-(1) was stretched in the machine direction (length direction) at a stretching speed of 0.3 m/min until the length of the catalyst layer was increased by 5% of the original length. Thereby, a membrane-electrode assembly including a catalyst layer having surface irregularities was finally obtained.

At this time, the rate of change in the thickness of the polymer electrolyte membrane was 1%, the rate of change in the thickness of the catalyst layer was 1%, the rate of change in the length of the active area of the catalyst layer was 5%, and the average depth of the surface irregularities was 0.75 µm, which was 11% of the total thickness of the catalyst layer.

### [Example 2]

A membrane-electrode assembly was manufactured in the same manner as in Example 1, except that a fluorinated polymer electrolyte membrane (thickness: 15 µm) was prepared using a fluorinated polymer (Nafion D2020) dispersion instead of the hydrocarbon-based ionomer dispersion. At this time, the thickness of the catalyst layer was about 6.9 µm.

Then, the manufactured membrane-electrode assembly was stretched on a roll under conditions of a stretching speed of 0.3 m/min and a stretching tension of 20 N until the length of the catalyst layer was increased by 7% of the original length. Thereby, a membrane-electrode assembly including a catalyst layer having surface irregularities was finally obtained.

At this time, the rate of change in the thickness of the polymer electrolyte membrane was 2%, the rate of change in the thickness of the catalyst layer thickness was 2%, the rate of change in the length of active area of the catalyst layer was 7%, and the average depth of the surface irregularities was 1.03 µm, which was 15% of the total thickness of the catalyst layer.

### [Comparative Example 1]

The membrane-electrode assembly of Example 1-(1) was used without being subjected to the surface irregularity formation step of Example 1-(2).

### [Comparative Example 2]

A membrane-electrode assembly was manufactured in the same manner as in Example 2, except that the stretching tension condition was changed from 20 N to 35 N.

At this time, the rate of change in the thickness of the polymer electrolyte membrane was 4%, the rate of change in the thickness of the catalyst layer was 4%, the rate of change in the length of the active area of the catalyst layer was 9%, and the average depth of the surface irregularities was 3.9 µm, which was 50% of the total thickness of the catalyst layer.

### [Comparative Example 3]

A membrane-electrode assembly was manufactured in the same manner as in Example 2, except that the stretching tension condition was changed from 20 N to 45 N.

At this time, the rate of change in the thickness of the polymer electrolyte membrane was 6%, the rate of change in the thickness of the catalyst layer was 7%, the rate of change in the length of the active area of the catalyst layer was 11%, and the average depth of the surface irregularities was 6.8 µm, which was 98% of the total thickness of the catalyst layer.

### [Experimental Example 1] Observation of Surface and Characteristics

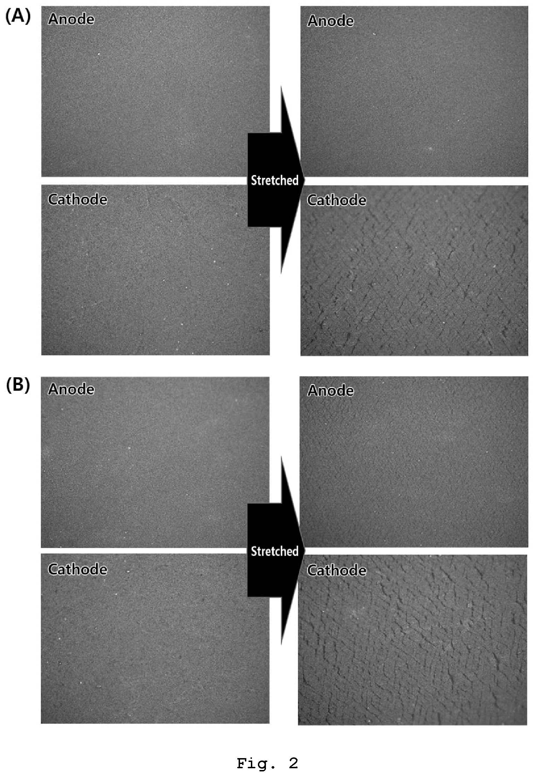

Fig. 2 shows surface images before and after stretching of the anode electrode and cathode electrode of each of the membrane-electrode assemblies manufactured in the Examples.

In order to observe the electrode surface before and after performing stretching in each of Examples 1 and 2, the surface was imaged using an optical microscope, and the images are shown in Fig. 2. At this time, Fig. 2(A) corresponds to Example 1, and Fig. 2(B) corresponds to Example 2. Referring to Fig. 2, it was confirmed that a number of surface irregularities occurred on the catalyst layer after stretching compared to before stretching.

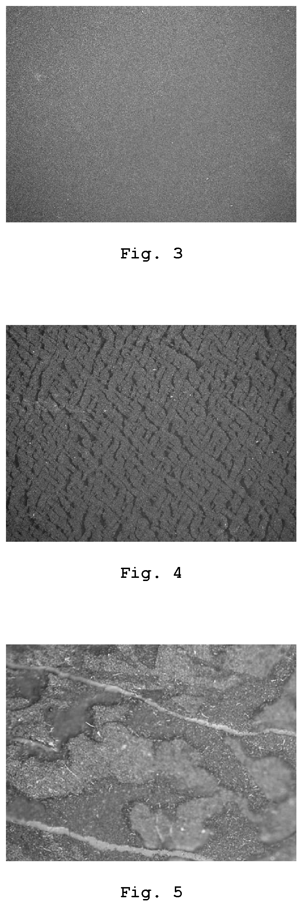

Fig. 3 is a surface image of the membrane-electrode assembly manufactured in Comparative Example 1, Fig. 4 is a surface image after stretching of the cathode electrode of the membrane-electrode assembly manufactured in Comparative Example 2, and Fig. 5 is a surface image after stretching of the cathode electrode of the membrane-electrode assembly manufactured in Comparative Example 3.

In order to observe the shape of the surface irregularities of the catalyst layer of the membrane-electrode assembly manufactured in each of Example 1, Example 2, and Comparative Examples 1 to 3, surface images were taken using an optical microscope.

Referring to Fig. 2, it was confirmed that, in the case of Example 1 and Example 2, concave portions were formed irregularly on the surface. Specifically, it was confirmed that, in the case of Example 1, irregular intersecting flat rhombus shapes as small surface irregularities appeared. It was confirmed that, in the case of Example 2, intersecting irregular triangular prism shapes as larger surface irregularities were formed.

Meanwhile, referring to Fig. 3, it was confirmed that, in the case of Comparative Example 1, no surface irregularities were formed on the catalyst layer. Referring to Fig. 4, it was confirmed that, in the case of Comparative Example 2, intersecting irregular triangular prisms as deeper surface irregularities were formed, and some surface irregularities reached the surface of the polymer electrolyte membrane, forming cracks. Referring to Fig. 5, it was confirmed that, in the case of Comparative Example 3, surface irregularities reached the surface of the polymer electrolyte membrane, forming cracks, and some of them detached from the electrode.

### [Experimental Example 2] Evaluation of Performance of Membrane-Electrode Assembly (80°C and 50% RH Conditions)

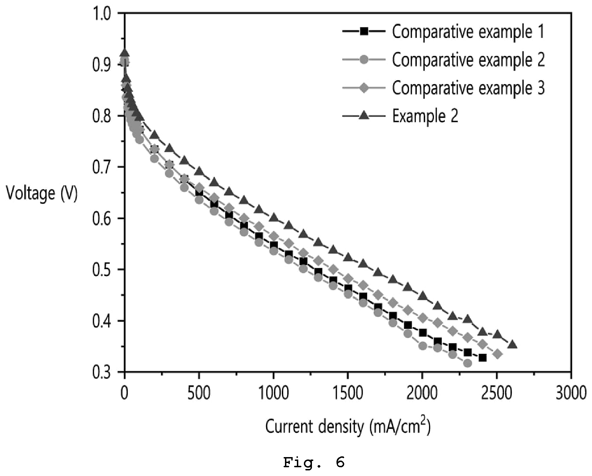

Fig. 6 shows the results of evaluating the performance of the membrane-electrode assemblies manufactured in Example 2 and Comparative Examples 1 to 3.

For the membrane-electrode assemblies manufactured in the Comparative Examples and the Examples, output performance was evaluated through I-V measurement. Specifically, to evaluate output performance under actual fuel cell operation conditions, the membrane-electrode assembly was tested using a fuel-cell unit cell evaluation device (Scribner 850 fuel cell test system). At this time, under conditions of 80°C, hydrogen (50% RH) and air (50% RH) were supplied to the anode and cathode, respectively, in stoichiometric amounts corresponding to 1.2/2.0. The current density at a voltage of 0.6 V was measured, and the results are shown in Fig. 6.

Referring to Fig. 6, it was confirmed that the membrane-electrode assembly manufactured in Example 2 exhibited better output performance than Comparative Examples 1 to 3.

### [Experimental Example 3] Evaluation of Durability of Membrane-Electrode Assembly (Wet-Dry Durability)

The physical durability of each membrane-electrode assembly was evaluated based on the durability evaluation protocol of the U.S. Department of Energy (DOE). Specifically, to evaluate the physical durability of the membrane-electrode assembly, H₂ crossover was measured after performing 20,000 wet/dry cycles. The measured values are shown in Table 1 below.

**[Table 1]**

| Wet/dry cycles (20,000 cycles) | H₂ crossover @0.2 V (mA/cm²) |
|---|---|
| Example 1 | 3.4 |
| Example 2 | 4.3 |
| Comparative Example 1 | 5.5 |
| Comparative Example 2 | 10.3 |
| Comparative Example 3 | 25.5 |

Referring to Table 1 above, it can be seen that the membrane-electrode assembly manufactured in each of Example 1 and Example 2 has better physical durability than Comparative Examples 1 to 3.

Although preferred embodiments of the present disclosure have been described in detail above, these embodiments are presented as specific examples of the present disclosure, and the scope of the present disclosure is not limited thereto. Various modifications and improvements made by those skilled in the art using the basic concepts of the present disclosure as defined in the appended claims also fall within the scope of the present disclosure.

**[Description of Reference Numerals]**

| | | | |
|---|---|---|---|
| 100: | membrane-electrode assembly | | |
| 110 | polymer electrolyte membrane | | |
| 120 | catalyst layer | 121 | surface irregularities |
| 200 | fuel cell | | |
| 210 | fuel supply unit | 220 | reforming unit |
| 230 | stack | 231 | first supply tube |
| 232 | second supply tube | 233 | first discharge tube |
| 234 | second discharge tube | 240 | oxidant supply unit |

## Claims

1. A membrane-electrode assembly comprising:
a polymer electrolyte membrane; and
a catalyst layer provided on at least one surface of the polymer electrolyte membrane,
wherein the catalyst layer has surface irregularities on a surface thereof.

2. The membrane-electrode assembly according to claim 1, wherein the surface irregularities of the catalyst layer are formed by stretching of the catalyst layer.

3. The membrane-electrode assembly according to claim 1, wherein the surface irregularities are 0.1 µm or more and 6 µm or less.

4. The membrane-electrode assembly according to claim 1, wherein the surface irregularities of the catalyst layer are formed in a concave shape.

5. The membrane-electrode assembly according to claim 4, wherein a depth of the surface irregularities is 20% or less of a thickness of the catalyst layer.

6. The membrane-electrode assembly according to claim 4, wherein the surface irregularities are distributed irregularly on the surface of the catalyst layer.

7. The membrane-electrode assembly according to claim 1, wherein an area of the surface irregularities of the catalyst layer is 20% or more and 95% or less of a total active area of the catalyst layer.

8. The membrane-electrode assembly according to claim 1, wherein
the polymer electrolyte membrane has a thickness of 5 µm or more and 30 µm or less, and
the catalyst layer has a thickness of 1 µm or more and 30 µm or less.

9. A method for manufacturing a membrane-electrode assembly, comprising:
a step of preparing a polymer electrolyte membrane;
a step of forming a catalyst layer on at least one surface of the polymer electrolyte membrane, thereby manufacturing a membrane-electrode assembly; and
a step of forming surface irregularities on the catalyst layer by stretching the membrane-electrode assembly.

10. The method for manufacturing a membrane-electrode assembly according to claim 9, wherein the stretching is performed in a machine direction (MD).

11. The method for manufacturing a membrane-electrode assembly according to claim 9, wherein the stretching is performed at a stretching speed of 1.0 m/min or less.

12. The method for manufacturing a membrane-electrode assembly according to claim 9, wherein the stretching is performed at a stretching tension of 30 N or less.

13. The method for manufacturing a membrane-electrode assembly according to claim 9, wherein the stretching is performed such that a thickness reduction rate of the polymer electrolyte membrane is 5% or less.

14. The method for manufacturing a membrane-electrode assembly according to claim 9, wherein the stretching is performed such that a rate of change in a length of an active area of the catalyst layer is 8% or less.
